# EUROPEAN PATENT APPLICATION

(11) **EP 4 712 310 A1**
(43) Date of publication of application: **18.03.2026**
(21) Application number: 24200132.9
(22) Date of filing: 13.09.2024
(51) Int. Cl.: H02J 50/15, G08C 23/02, H04B 11/00

(54) **A WIRELESS ACOUSTIC POWER RECEIVER FOR A LOAD AND FOR COMMUNICATION**

(71) Applicant: Imec VZW, 3001 Leuven (BE)
(72) Inventor: Wu, Lixiang, 3001 Heverlee (BE); Wong, Oi Ying, 3000 Leuven (BE); Brondani Torri, Guilherme, 3360 Bierbeek (BE); Vysotskyi, Bogdan, 3001 Heverlee (BE)
(74) Representative: Roth, Sebastian

(57) **Abstract**

The disclosure proposes a wireless acoustic power receiver comprising an acoustic transducer and a corresponding method of operation. The acoustic transducer is configured to: capture a first alternating current (AC) signal with respectively a first and a second electrode; capture a second AC signal with respectively the first electrode at a first phase and the second electrode at a second phase. The first and the second AC signal are respectively based on vibrations of a first and a second vibration mode of a diaphragm that are respectively induced by a first and a second acoustic frequency. The receiver is configured to provide an electrical power of the first AC signal or the second AC signal to a load, and receive a downlink data stream based on and/or provide an uplink data stream by selectively reflecting and modulating the second acoustic frequency or the first acoustic frequency.

## Description

### TECHNICAL FIELD

The present disclosure relates to wireless acoustic power reception and wireless communication. The disclosure proposes a wireless acoustic power receiver for a load, and a corresponding method for operating the wireless acoustic power receiver. The wireless acoustic power receiver comprises circuitry for communication.

### BACKGROUND

In the field of communication systems and wireless energy transmission systems, wireless technologies capable of transferring data and/or energy from one device to another over a distance and/or through an obstructive material or medium, and without any intermediary physical connection, have proven their worth in terms of flexibility and convenience compared to their wired counterparts. In many applications, however, a direct access to sources or recipients is complex, could lead to undesirable or hazardous consequences, or is simply not technically possible. In such applications, wireless technologies offer largely beneficial alternatives to transmit to or receive information from devices, e.g., sensors, actuators, transceivers, transducers, which are nested in remote or hardly accessible locations. This allows for remote exchange of instructions, sensor readings, or diagnostic information with ease of access and maintenance, and without the need for physical connections.

For example, in biomedical applications, wired technologies entering a biological body by means of surgery, or through an existing canal, or in some cases worn externally, may provoke skin irritations or even infections by introducing bacteria and other external agents in the organism. Moreover, they may limit the patient's mobility by tethering them, restricting their range of movement, or even blocking some types of motion due to the space they take. Removing physical connections and using a wireless system would therefore reduce the patient's discomfort.

However, ensuring that a remote device remains operational, in other words that it has enough power to sustain itself and play the role it was designed for, especially when active wireless communication devices are involved, is a crucial aspect to consider when opting for such a wireless system. Conventionally, batteries are used to store energy and deliver energy to the devices over time. In miniaturized systems, however, such configurations show more and more limitations, since, as the systems are scaled down, the battery becomes more and more difficult to shrink, while keeping enough energy for the considered application. In addition, batteries need to be eventually replaced, once they reach the end of their lifetime. However, this may involve a difficult, costly, and/or delicate procedure that might put a patient's health at risk.

In particular, conventional single-use lithium-based batteries of reasonable size usually last between 5 and 15 years, even for power delivery inferior to 1mW. With such limited battery lifetime, for applications such as a pacemaker, the power source is likely to be replaced multiple times over the patient's life span. This leads to large costs to bear financially on top of high risks of complications during the replacement procedure, for example, in proximity of vital organs like the heart.

Notably, batteries and/or active devices may benefit from recharging with wireless powering technologies. Aside from the reduction in size, using single rechargeable components allows for reduction in environmental costs since it limits resource consumption and waste generation to achieve the same result. Additionally, there are some applications where the components, e.g. active sensors or stimulators, remain inactive unless power is received by the RX.

Also in environmental or physical sensing applications, the sensors may be in some cases technically difficult or hazardous to retrieve. For instance, they may be located underwater or in contaminated areas that are completely shut off. Additionally, extensive cabling may limit their freedom of movement.

### SUMMARY

In view of the above, an objective of this disclosure is to provide a wireless power receiver for receiving power and for wireless communication. Another objective is to enable simultaneous power reception and wireless communication. Another objective is to receive power and enable wireless communication over a long distance, while having low attenuation through the relevant media, for example, biological tissue.

These and other objectives are achieved by the solutions of this disclosure as described in the independent claims. Advantageous implementations are further described in the dependent claims.

The solution of this disclosure is based on the following considerations.

Enabling a safe and power-efficient method to provide energy to a recipient and exchange data with it is valuable for a large range of applications. This includes medical implants for monitoring but also for external stimulation to excite tissues such as muscles, nerves, or directly the brain to elicit responses or modulate the activity of the targeted biological tissues.

An option to remotely deliver energy to implants and communicate with them is through acoustic power. Compared to conventional wireless technologies, such as induction or radio frequency waves, acoustic waves bear some advantageous properties over the others. Firstly, acoustic waves usually experience less attenuation in biological tissues than other alternatives, allowing them to reach larger depth to deliver a given energy payload at a given power. Secondly, in similar conditions, acoustic waves do not cause as much heating nor do they pose as much health risks as other alternatives, which means that safety limits in terms of power density may be raised, and therefore more power density can be provided. Thirdly, acoustic receivers can be significantly miniaturized compared to their current alternatives, allowing them to be coupled with tiny and less intrusive implants, which adds to the comfort of the bearer. Lastly, acoustic waves are compatible with beam steering and focusing techniques, and energy can be efficiently transported and concentrated towards a targeted location with minimal losses.

A piezoelectric micromachined ultrasonic transducer (pMUT) may be used for such acoustic power applications. A pMUT may have multiple flexural vibration modes, may have a circular geometry, and may comprise a multilayer diaphragm that contains a piezoelectric layer sandwiched between a top electrode and a bottom electrode on top of an elastic layer. Frequency modes corresponding to this circular configuration may be denoted by the couples (m,n) such as (0,1), (0,2), (0,3), (1,1), (1,2), (1,3), etc., where m determines the number of radial nodal lines and n determines the number of nodal circles.

A receiver comprising a dual-frequency transducer that is capable of exploiting two different vibration modes may be capable of handling two channels for different purposes, i.e. one channel for communication and one channel for power reception.

A first aspect of this disclosure provides a wireless acoustic power receiver for a load, for example, a wireless acoustic power receiver for wireless communication and for a load, the receiver comprising an acoustic transducer, a first circuitry, and a second circuitry, the acoustic transducer comprising a diaphragm, a first electrode provided on the diaphragm, and a second electrode provided on the diaphragm, wherein the acoustic transducer is configured to receive one or more acoustic waves comprising a first acoustic frequency and a second acoustic frequency with the diaphragm, wherein the first acoustic frequency is different from the second acoustic frequency; capture a first alternating current (AC) signal with respectively the first electrode and the second electrode, wherein the first AC signal is based on vibrations of a first vibration mode of the diaphragm that are induced by the first acoustic frequency; and capture a second AC signal with respectively the first electrode at a first phase and the second electrode at a second phase, wherein the second AC signal is based on vibrations of a second vibration mode of the diaphragm that are induced by the second acoustic frequency, wherein the first vibration mode is different from the second vibration mode, and wherein the first phase is different from the second phase; wherein the receiver is configured to provide an electrical power of the first AC signal or the second AC signal from the first electrode and the second electrode to the load with the first circuitry; and is further configured to receive a downlink data stream with the second circuitry, wherein the downlink data stream is carried by the second frequency if the electrical power of the first AC signal is provided and is carried by the first frequency if the electrical power of the second AC signal is provided; and/or selectively reflect and modulate with the second circuitry and with the acoustic transducer the second acoustic frequency based on the second AC signal if the electrical power of the first AC signal is provided and the first acoustic frequency based on the first AC signal if the electrical power of the second AC signal is provided.

The second circuitry may be a circuitry for communication and may thus be denoted a "communication circuitry" in this disclosure. The first circuitry may be a circuitry for power reception and may thus be denoted a "power circuitry" in this disclosure.

The first AC signal and the second AC signal having the first phase may form a first combined AC signal at the first electrode. The first AC signal and the second AC signal having the second phase may form a second combined AC signal at the second electrode.

The acoustic transducer may be configured to capture the first AC signal with respectively the first electrode at a third phase, and the second electrode at a fourth phase or at the third phase.

The second acoustic frequency may carry the downlink data stream. For example, the second acoustic frequency may be modulated according to the downlink data stream. Alternatively, the first acoustic frequency may carry the downlink data stream. For example, the first acoustic frequency may be modulated according to the downlink data stream.

The data transfer uplink may rely on backscattering or the working principle of backscatter communication.

The one or more acoustic waves may comprise a first acoustic wave and a second acoustic wave, wherein the first acoustic frequency may be a center frequency of the first acoustic wave, and the second acoustic frequency may be a center frequency of the second acoustic wave. Alternatively, the first acoustic frequency and the second acoustic frequency may each be an acoustic frequency of the same acoustic wave.

The one or more acoustic waves may be ultrasound waves.

The diaphragm may be a piezoelectric diaphragm, for example, a piezoelectric membrane. The diaphragm may be a membrane, plate, or shell.

The first vibration mode may be a fundamental vibration mode of the diaphragm. For example, the first vibration mode may be a (0,1) vibration mode. The second vibration mode may be a (1,1) vibration mode. Alternatively, the first vibration mode and/or the second vibration mode may be other vibration modes. For example, the first vibration mode may be a (0,2) vibration mode, and/or the second vibration mode may be a (1,2) vibration mode.

The second phase and the first phase may have a 180° phase difference.

The second vibration mode may or may not be a point symmetric vibration mode. For example, the second vibration mode may or may not be a (0,2) vibration mode.

The receiver of the first aspect may be charged without interruption. Thus, requirements on battery in terms of capacity can be relaxed. For example, the size of the battery can be greatly reduced, so that the receiver can be further miniaturized. As microscale devices scale down, the circuit and power supply are expected to follow as well. However, in order for the power supply to provide enough energy, there are minimum requirements in size that eventually limits how much the system can be shrunk down. This is, for example, the case with single-use batteries that need to be large or they would require even more frequent replacements, with possible detrimental consequences resulting from such procedures.

The receiver of the first aspect enables simultaneous transfer of power and data, without a need for switching. Thus, both processes can be performed much faster. Conventional devices in the field of wireless power and data transfer can either be in a power transfer mode, or in a data transfer mode. This results in the systems, with only a single transducer in the Rx, to have lower power and data transfer rates, since the systems need to time-multiplex between the power and data transfer modes. For example, the receiver of the first aspect allows for continuous communication that no longer needs to be interrupted (with delays caused by the switching method) when the energy storage unit needs to be replenished as both can be done in parallel. A data exchange rate may be high enough to satisfy the requirements of basic applications, such as sensor readout, stimulator set-up and status readout.

Conventional devices may require two separate devices for power reception and uplink or power reception and downlink. The receiver of the first aspect can be further miniaturized, as only one device may be required.

Conventional wireless power transfer (WPT) systems, in which a receiver has a single transducer for both power and data transfer, use the same carrier frequency to transfer power and data, as existing transducers are usually designed to operate around one single frequency. Transmitting both the power and data with the same frequency limits the transfer efficiency for both, as there may be interferences between the two functions, and trying to optimize them both may imply finding compromises (trade-offs). For example, in a given system, an ideal power transfer implies continuous waves, whereas a preferred data transfer would rather use communication pulses or intermittent waves. In the receiver of the first aspect, a better transfer efficiency may be achieved for both.

Additionally, transferring power on the same frequency as the data, increases the difficulties in maintaining the data signal integrity, due to interferences between both functions. By having separate frequencies for data exchange and power transfer, the receiver of the first aspect improves data integrity by eliminating a source of interference.

The receiver of the first aspect is based on the use of acoustic waves that are known to be able to penetrate deeper with low attenuation, to enable to focus on target areas. Also, modulating an acoustic wave that is then reflected instead of generating acoustic waves twice is a method that enables to reduce the energy involved in communication. Additionally, data sent back can relate to the energy storage unit's status and history, which could allow us to control it better and optimize its use.

In an implementation form of the first aspect, the receiver is configured to modulate the second AC signal having the first phase and the second AC signal having the second phase based on an uplink data stream with the second circuitry; and selectively reflect and modulate the second acoustic frequency of the one or more acoustic waves based on the modulated second AC signal having the first phase and the modulated second AC signal having the second phase with the acoustic transducer; or wherein the receiver is configured to modulate the first AC signal based on an uplink data stream with the second circuitry; and selectively reflect and modulate the first acoustic frequency of the one or more acoustic waves based on the modulated first AC signal with the acoustic transducer.

For example, the uplink data stream may be a binary uplink data stream.

For example, the uplink data stream may be based on values of at least one of: temperature, pressure, concentrations, position, orientation, statuses, detection events, rates, actuator/stimulator/battery/sensor status, and history.

In this disclosure, the first acoustic frequency may be for communication and the second acoustic frequency may be for power reception or the second acoustic frequency may be for communication and the first acoustic frequency may be for power reception.

The following implementation forms of the first aspect may relate to the exemplary case of the first acoustic frequency being for power reception and the second acoustic frequency being for communication.

However, without loss of generality, it will be appreciated by one skilled in the art that the following implementation forms of the first aspect may alternatively relate to the exemplary case of the first acoustic frequency being for communication and the second acoustic frequency being for power reception.

In a further implementation form of the first aspect, the first AC signal and the second AC signal having the first phase form a first combined AC signal at the first electrode, wherein the first AC signal and the second AC signal having the second phase form a second combined AC signal at the second electrode, wherein the first circuitry is configured to extract the first AC signal from respectively the first combined AC signal and the second combined AC signal; and provide the electrical power of the extracted first AC signal to the load.

The first circuitry may comprise a first rectifier and a second rectifier. The first circuitry may be configured to provide the electrical power of the extracted first AC signal from the first combined AC signal with the first rectifier and from the second combined AC signal with the second rectifier to the load.

In a further implementation form of the first aspect, the first circuitry comprises a first frequency selector and a second frequency selector that are respectively configured to extract the first AC signal from the first combined AC signal and the second combined AC signal.

For example, the first frequency selector and the second frequency selector may respectively be a band-pass filter.

In a further implementation form of the first aspect, the first AC signal and the second AC signal having the first phase form a first combined AC signal at the first electrode, wherein the first AC signal and the second AC signal having the second phase form a second combined AC signal at the second electrode, wherein the second circuitry is configured to extract the second AC signal from respectively the first combined AC signal and the second combined AC signal; and obtain the downlink data stream from the extracted second AC signal.

In a further implementation form of the first aspect, the second circuitry is configured to subtract the first combined AC signal and the second combined AC signal to extract the second AC signal.

For example, the second circuitry may be configured to subtract the first combined AC signal and the second combined AC signal to extract the second AC signal to obtain the downlink data stream from said extracted second AC signal.

For example, if the first combined AC signal comprises the first AC signal having the third phase and the second AC signal having the first phase, and the second combined AC signal comprises the first AC signal having the third phase and the second AC signal having the second phase, then subtracting the first combined AC signal and the second combined AC signal may lead to destructive interference between and the removal of the two first AC signals having the third phase. However, the second AC signal may not be removed, as the first phase is different form the second phase. For example, if the first phase is 180° shifted with respect to the second phase, then the second AC signal having the first phase and the second AC signal having the second phase are constructively combined and the second AC signal can be extracted.

In a further implementation form of the first aspect, the first phase is 180° shifted with respect to the second phase, and/or wherein the first AC signal is captured by the first electrode and the second electrode at the same phase.

In a further implementation form of the first aspect, the first AC signal and the second AC signal having the first phase form a first combined AC signal at the first electrode, wherein the first AC signal the second AC signal having the second phase form a second combined AC signal at the second electrode, wherein the second circuitry comprises a third frequency selector and a fourth frequency selector that are respectively configured to extract the second AC signal having the first phase from the first combined AC signal and the second AC signal having the second phase from the second combined AC signal.

For example, the third frequency selector and the fourth frequency selector may respectively be a band-pass filter.

The second circuitry may be configured to perform different methods of extraction. For example, to obtain the downlink data stream from the extracted second AC signal, the second circuitry may be configured to subtract the first combined AC signal and the second combined AC signal to extract the second AC signal, wherein to modulate the second AC signal, the second circuitry may be configured to extract the second AC with the third frequency selector and the fourth frequency selector.

In a further implementation form of the first aspect, the second circuitry comprises a first switch, and a second switch, wherein in a first switching state of the first switch, the first switch is configured to receive and provide the second AC signal having the first phase, for example, the extracted second AC signal having the first phase, to a first impedance matched load for the second frequency, to absorb the second AC signal having the first phase, wherein in a first switching state of the second switch, the second switch is configured to receive and provide the second AC signal having the second phase, for example, the extracted second AC signal having the second phase, to a second impedance matched load for the second frequency, to absorb the second AC signal having the second phase, wherein in a second switching state of the first switch, the first switch is configured to receive and reflect the second AC signal having the first phase, for example, the extracted second AC signal having the first phase, towards the first electrode, and wherein in a second switching state of the second switch, the second switch is configured to receive and reflect the second AC signal having the second phase, for example, the extracted second AC signal having the second phase, towards the second electrode, wherein the second circuitry is configured to switch the first switch between the first switching state and the second switching state according to a binary uplink data stream, so as to modulate the second AC signal having the first phase, for example, the extracted second AC signal having the first phase; and switch the second switch between the first switching state and the second switching state according to the binary uplink data stream, so as to modulate the second AC signal having the second phase, for example, the extracted second AC signal having the second phase.

In a further implementation form of the first aspect, the second circuitry is further configured to provide the modulated second AC signal having the first phase to the first electrode and the modulated second AC signal having the second phase to the second electrode; and, wherein the acoustic transducer is configured to selectively reflect and modulate the second acoustic frequency of the one more acoustic waves by selectively supporting or suppressing the vibrations of the second vibration mode of the diaphragm based on the modulated second AC signal that has the first phase at the first electrode and based on the modulated second AC signal that has the second phase at the second electrode.

The receiver of the first aspect may be configured to modulate the impedance of the receiver in a way that favors (which may represent a "1" in the uplink data stream) or that suppresses (which may represent a "0" in the uplink data stream) the reflection of an incidental acoustic wave of a data related frequency, for example, the second acoustic frequency.

In a further implementation form of the first aspect, the second vibration mode has the next higher resonance frequency of the diaphragm following a resonance frequency of the first vibration mode, or the first vibration mode has the next higher resonance frequency of the diaphragm following a resonance frequency of the second vibration mode.

In a further implementation form of the first aspect, the acoustic transducer is configured to simultaneously capture the second AC signal at the first phase and the first AC signal with the first electrode; and/or simultaneously capture the second AC signal at the second phase and the first AC signal with the second electrode.

In a further implementation form of the first aspect, the load is one of: a medical implant, a device for use underwater, a device for use in air, and an Internet of Things system.

For example, the load may be a sensor, an actuator, a monitor, a stimulator, an autonomous system to use in a body, underwater or in air.

In a further implementation form of the first aspect, the acoustic transducer comprises a piezoelectric diaphragm and/or is a piezoelectric micromachined ultrasound transducer, pMUT; or wherein the acoustic transducer is a capacitive micromachined ultrasound transducer (cMUT).

In a further implementation form of the first aspect, the receiver further comprises: a first dual-frequency impedance matching circuitry adapted and electrically connected to the first electrode, the first circuitry, and the second circuitry; a second dual-frequency impedance matching circuitry adapted and electrically connected to the second electrode, the first circuitry, and the second circuitry, wherein the first AC signal and the second AC signal having the first phase form a first combined AC signal at the first electrode, wherein the first AC signal and the second AC signal having the second phase form a second combined AC signal at the second electrode, wherein the acoustic transducer is configured to: provide the first combined AC signal from the first electrode through the first dual-frequency impedance matching circuitry to the first circuitry and the second circuitry, and provide the second combined AC signal from the second electrode through the second dual-frequency impedance matching circuitry to the first circuitry and the second circuitry.

Each dual-frequency impedance matching network or circuitry may be configured to match the two AC signals at the same time.

The first dual-frequency impedance matching circuitry and the second dual-frequency impedance matching circuitry may be configured to simultaneously provide the first AC signal and the second AC signal.

For example, an impedance of the first electrode may be matched with the first dual-frequency impedance matching circuitry to an impedance of the load for a frequency of the first AC signal, and an impedance of the second electrode may be matched with the second dual-frequency impedance matching circuitry to the impedance of the load for the frequency of the first AC signal.

The first dual-frequency impedance matching circuitry and/or the second dual-frequency impedance matching circuitry may each work for both the first and second AC signal at the same time. The first dual-frequency impedance matching circuitry and/or the second dual-frequency impedance matching circuitry may each be a combination of two basic impedance matching networks and may be optimized to match two center frequencies without significantly disturbing each other.

In a further implementation form of the first aspect, the second acoustic frequency is less than 5 times larger than the first acoustic frequency, or the first acoustic frequency is less than 5 times larger than the second acoustic frequency.

In a further implementation form of the first aspect, the first electrode and the second electrode are formed symmetrically to each other and/or are arranged symmetrically on the diaphragm.

In a further implementation form of the first aspect, at least one of the first electrode, the second electrode, and the diaphragm has a shape that is one of: elongated, square, rectangular, oval, apodised, and circular.

For example, the first electrode and the second electrode each may have a shape that is one of: elongated, square, rectangular, oval, apodised, and circular.

A second aspect of this disclosure provides a method of operating a wireless acoustic power receiver for a load, wherein the receiver comprises an acoustic transducer, a first circuitry, and a second circuitry, the acoustic transducer comprising a diaphragm, a first electrode provided on the diaphragm, and a second electrode provided on the diaphragm, wherein the method comprises: receiving, with the acoustic transducer, one or more acoustic waves comprising a first acoustic frequency and a second acoustic frequency with the diaphragm, wherein the first acoustic frequency is different from the second acoustic frequency; capturing a first AC signal with respectively the first electrode and the second electrode, wherein the first AC signal is based on vibrations of a first vibration mode of the diaphragm that are induced by the first acoustic frequency; and capturing a second AC signal with respectively the first electrode at a first phase and the second electrode at a second phase, wherein the second AC signal is based on vibrations of a second vibration mode of the diaphragm that are induced by the second acoustic frequency, wherein the first vibration mode is different from the second vibration mode, and wherein the first phase is different from the second phase; wherein the method further comprises providing an electrical power of the first AC signal or the second AC signal from the first electrode and the second electrode to the load with the first circuitry; and further comprises receiving a downlink data stream with the second circuitry, wherein the downlink data stream is carried by the second frequency if the electrical power of the first AC signal is provided and is carried by the first frequency if the electrical power of the second AC signal is provided; and/or selectively reflecting and modulating with the second circuitry and with the acoustic transducer the second acoustic frequency based on the second AC signal if the electrical power of the first AC signal is provided and the first acoustic frequency based on the first AC signal if the electrical power of the second AC signal is provided.

The method of the second aspect may have implementation forms that correspond to the implementation forms of the acoustic power receiver of the first aspect. The method of the second aspect and its implementation forms achieve the advantages and effects described above for the acoustic power receiver of the first aspect and its respective implementation forms.

In this disclosure, the phrases, "receiver", "remote receiver" and "acoustic power receiver" may be used interchangeably. A receiver of a third circuitry may be referred to as "the other receiver".

In this disclosure, the term "pMUT" may for example, refer to a microscale device that converts electrical energy into ultrasonic energy, and vice versa, by using the flexural motion or thickness extension of a thin membrane coupled with, or integrating a thin piezoelectric film.

In this disclosure, the term "WPT" may, for example, refer to a transmission of electrical energy from a power source to an electrical load without the need of physical conductors such as wires or cables. Instead, electromagnetic fields or waves may be utilized to transfer power from the transmitter (sender) to the receiver (load). Conventional WPT methods include inductive coupling, resonant inductive coupling, radio frequency waves, and ultrasound waves. WPT has a wide range of applications such as charging wearables, powering implantable medical devices, charging vehicles, and powering sensors and actuators in hard-to-reach or hazardous environments.

In this disclosure, the term "ultrasound" may for example refer to sound with frequencies above the range of sensitivity of human hearing, for example, greater than 20 kHz.

Further, in this disclosure, a first element and a second element are considered to be different elements, if not explicitly mentioned otherwise. For example, the first phase and the second phase are considered to be different phases.

Further, in this disclosure, terms such as "first" and "second" are merely intended for a purpose of description, and shall not be understood as an indication or implication of relative importance.

### BRIEF DESCRIPTION OF DRAWINGS

The above described aspects and implementation forms will be explained in the following description of specific embodiments in relation to the enclosed drawings, in which
- FIG. 1: shows a wireless acoustic power receiver according to this disclosure.
- FIG. 2: shows an exemplary pMUT according to this disclosure.
- FIG. 3: shows directivity patterns of an exemplary acoustic transducer according to this disclosure.
- FIG. 4a: shows an exemplary vibration mode at 1 MHz.
- FIG. 4b: shows an exemplary vibration mode at 2.5 MHz.
- FIG. 5: shows a power transmission system for communication according to this disclosure.
- FIG. 6a: shows a transmitter module to send data according to this disclosure.
- FIG. 6b: shows another receiver module to capture data according to this disclosure.
- FIG. 6c: shows a transceiver to send data and capture data according to this disclosure.
- FIG. 7: shows an acoustic power receiver according to this disclosure.
- FIG. 8: shows a system comprising the acoustic power receiver according to this disclosure performing an uplink operation.
- FIG. 9: shows an interaction based on one or more acoustic waves between the other transducers and the remote receiver according to this disclosure.
- FIG. 10: shows a conversion between analog voltage values and binary values over time of a signal that is based on an uplink data stream according to this disclosure.
- FIG. 11: shows a system comprising the acoustic power receiver according to this disclosure performing a downlink operation.
- FIG. 12: shows exemplary signals obtained with a dual-frequency acoustic transducer of an acoustic power receiver according to this disclosure.
- FIG. 13: shows an exemplary acoustic power receiver according to this disclosure.
- FIG. 14: shows an exemplary system comprising a third circuitry and an acoustic power receiver according to this disclosure.
- FIG. 15: shows a method according to this disclosure.

### DETAILED DESCRIPTION OF EMBODIMENTS

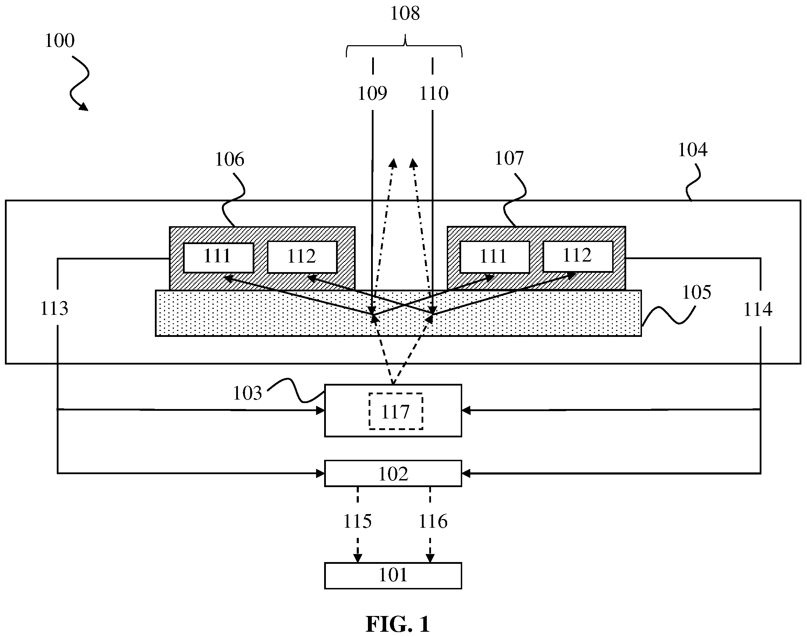

FIG. 1 shows a wireless acoustic power receiver 100 according to this disclosure. The wireless acoustic power receiver 100 is for a load 101, i.e., may be used to power the load. The wireless acoustic power receiver 100 may be integrated with the load 101. The wireless acoustic power receiver 100 may be integrated with or comprised in a medical implant, or similar biomedical application. The load 101 may be a battery, for instance, for powering the medical implant or similar biomedical application.

The acoustic power receiver 100 comprises an acoustic transducer 104, a first circuitry 102, and a second circuitry 103. The acoustic transducer 104 comprises a diaphragm 105 (e.g. a membrane), a first electrode 106 provided on the diaphragm 105, and a second electrode 107 provided on the diaphragm 105. The acoustic transducer 104 may comprise one or more further electrodes, which may be provided on the diaphragm 105 on the other side of the first and second electrode 106, 107.

The acoustic transducer 104 is configured to receive one or more acoustic waves 108 comprising a first acoustic frequency 109 and a second acoustic frequency 110 with the diaphragm 105. The one or more acoustic waves 108 are received with the diaphragm 105, and may vibrate the diaphragm 105. The diaphragm 105 may have more than one vibration mode. The acoustic transducer 104 is configured to capture a first AC signal with respectively the first electrode 106 and the second electrode 107, wherein the first AC signal 111 is based on vibrations of a first vibration mode of the diaphragm 105 that are induced by the first acoustic frequency 109; and capture a second AC signal 112 with respectively the first electrode 106 at a first phase 113 and the second electrode 107 at a second phase 114, wherein the second AC signal 112 is based on vibrations of a second vibration mode of the diaphragm 105 that are induced by the second acoustic frequency 110.

The first acoustic frequency 109 is different from the second acoustic frequency 110, the first vibration mode is different from the second vibration mode, and the first phase 113 is different from the second phase 114. For instance, the first phase may be the opposite of the second phase, i.e., the second vibration mode may be such that the first and the second electrode 106, 107 are moved in anti-phase by the vibration.

The receiver 100 is configured to provide an electrical power 115 of the first AC signal 111 and/or an electrical power 116 of the second AC signal 112 from the first electrode 106 and the second electrode 107 to the load 101 with the first circuitry 102. In this way, the load 101 can be wirelessly powered.

The receiver 100 is further configured to, for example, if the acoustic power receiver 100 is in a first mode, receive a downlink data stream 117 with the second circuitry 103. The downlink data stream 117 is carried by the second frequency if the electrical power 115 of the first AC signal 111 is provided, and is carried by the first frequency if the electrical power 116 of the second AC signal 112 is provided. Receiving the downlink data stream 117 is optional, as indicated by the dashed downlink data stream 117 box in FIG. 1.

Alternatively or additionally, the receiver 100 is further configured to, for example, if the acoustic power receiver 100 is in a second mode, selectively reflect and modulate with the second circuitry 103 and with the acoustic transducer 104 the second acoustic frequency 110 based on the second AC signal 112 if the electrical power 115 of the first AC signal 111 is provided, and selectively reflect and modulate with the second circuitry 103 and with the acoustic transducer 104 the first acoustic frequency 109 based on the first AC signal 111 if the electrical power 116 of the second AC signal 112 is provided. The selectively reflected first acoustic frequency 109 and second acoustic frequency 110 are indicated by the dot-dashed arrows in FIG. 1. Either the first acoustic frequency 109 or the second acoustic frequency 110 may be selectively reflected and modulated. Selectively reflecting and modulating the first acoustic frequency 109 or the second acoustic frequency 110 is optional as indicated the dashed arrows from the second circuitry 103 to the first and second acoustic frequencies 109, 110.

For example, the acoustic power receiver 100 may be configured to switch, for example, sequentially, between the first mode of the acoustic power receiver 100 and the second mode of the acoustic power receiver 100. For example, at a first point in time the acoustic power receiver 100 may be in the first mode of the acoustic power receiver 100 and may be configured to receive the downlink data stream 117 with the second circuitry 103. At a second point in time the acoustic power receiver 100 may be in the second mode of the acoustic power receiver 100 and may be configured to selectively reflect and modulate with the second circuitry 103 and with the acoustic transducer 104 the second acoustic frequency 110 or the first acoustic frequency 109.

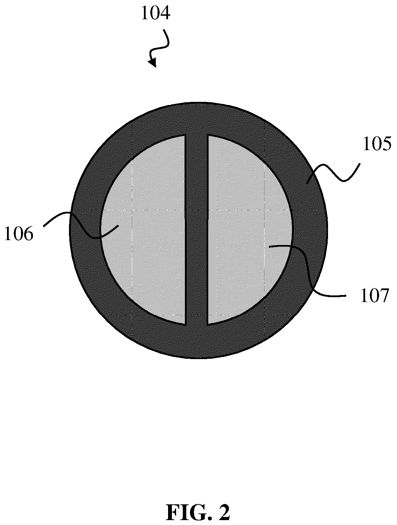

FIG. 2 shows an exemplary dual-frequency transducer 104 being a pMUT with a circular fixed boundary and comprising a pair of symmetrical electrodes 106, 107 and a diaphragm or membrane 105, wherein the dual-frequency transducer 104 is shown in top-view. The shape of the electrodes 106, 107 may or may not be semi-circular.

The pair of symmetrical electrodes 106, 107 may for example capture, in the case of a membrane 104 with circular fixed boundary, the vibration modes (0,1) and (1,1).

The pair of symmetrical electrodes 106, 107 may form "front or back" electrode layers that are sandwiching with a "back or front" electrode layer a flexible membrane 105 comprising a piezoelectric layer.

The acoustic transducer 104 may be covered with a thin electrical insulation layer, for example, made of biocompatible soft materials, to protect the exposed electrode(s) 106, 107 from the outside environment. For example, a non-conductive polymer layer such as a polyimide film or a parylene film may be used. The polyimide film may be formed by lamination, metallization, punching, or adhesive coating. The parylene film may be formed by chemical vapor deposition or atomic layer deposition.

pMUTs may have a series of frequency bands and may have different directivity patterns at different frequencies. But the higher the working frequency, the stronger the attenuation in the medium may be. So, the frequency bands that are close to the fundamental frequency may be preferred for wireless power transfer to penetrate further and reach a receiver 100 located at a larger distance.

For an exemplary dual-frequency pMUT using the first two symmetric vibration modes (0,1) and (0,2), a second center frequency, which is about 5 times a first center frequency, may be relatively too high for WPT applications. The vibration mode (1,1) may be used instead along with the (0,1) vibration mode. Hence, the second center frequency may be then only about 2.5 times the first center frequency.

The acoustic transducer 104 can simultaneously capture two different acoustic frequencies 109, 110 at once.

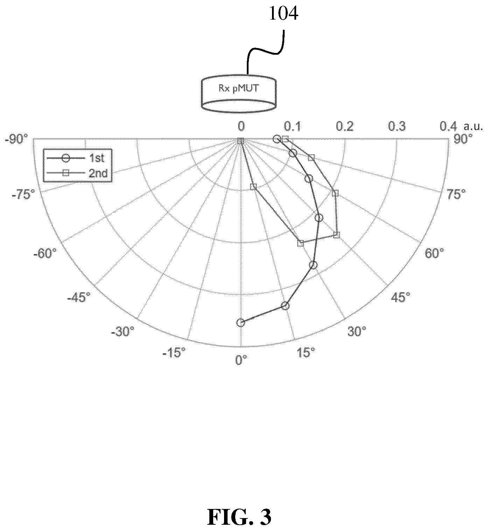

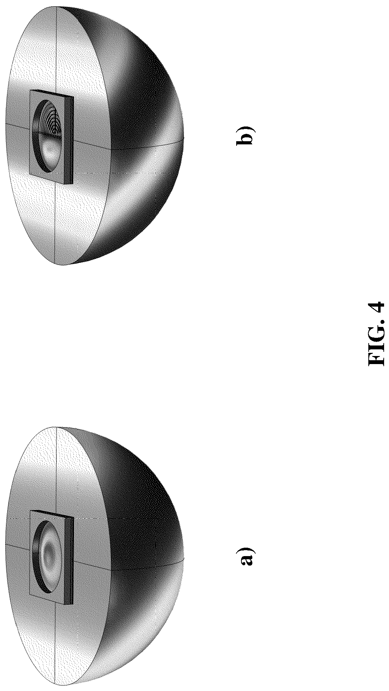

FIG. 3 and FIG. 4 show the operation of a dual-frequency pMUT receiver 100 with a diaphragm 104 having a circular fixed boundary. For example, the diaphragm 104 may be efficiently excited by a first resonance frequency 109 at 1 MHz and by a second resonance frequency 110 at about 2.5 MHz.

FIG. 3 shows particularly a directivity diagram for both frequencies 109, 110 and for angles up to 90° with respect to the direction of maximum sensitivity. The symmetrical part is omitted in FIG. 3.

FIG. 4a shows particularly a representation of the vibration mode associated with the first resonance frequency and with the incident wavefront coming at an angle of 45° with respect to the normal of the diaphragm 105. FIG. 4a shows an exemplary vibration mode at 1 MHz. FIG. 4b shows particularly a representation of the vibration mode associated with the second resonance frequency and with the incident wavefront coming at an angle of 45° with respect to the normal of the diaphragm 105. FIG. 4b shows an exemplary vibration mode at 2.5 MHz.

The different vibrations modes may be considered as multiple independent channels.

The receive directivity of a dual-frequency pMUT utilizing vibration modes of (0, 1) and (1, 1) may be a combination of the receive directivity of a single-frequency pMUT working at (0, 1) mode and that working at (1, 1) mode. The receive directivity of a dual-frequency pMUT may be broadened and optimized by adjusting the shape and size of the pMUT diaphragm 105.

In the field of wireless communication, efficient powering is of paramount importance for any miniature target device in a hardly accessible location. A system including the acoustic power receiver 100 may be for simultaneous ultrasonic power transfer and data exchange, and may include two or more ultrasonic transducers to transmit and receive ultrasonic signals, and some interface electronics for the ultrasonic transducers. At least one ultrasonic transducer 104 may be located at the remote side in the acoustic power receiver 100, for example, it could be implanted in a biological body. The remote ultrasonic transducer may be a dual-frequency piezoelectric micromachined ultrasonic transducer 104 using the vibration modes (0,1) and (1,1). The system may enable wireless two-way communication as well as charging capabilities through a medium or material via an ultrasonic communication link, which may find use in many applications such as charging of implanted medical devices, biological tissues stimulation, structure health monitoring, tissue monitoring, environment monitoring, communication with immersed components, powering of wearables, transducers, and actuators located in hardly accessible areas.

A third circuit 125 may be located in an accessible location which contains another receiver, a transmitter and/or a transceiver, and a first circuit 102 and a second circuit 103 may be located in a remote location which contains the acoustic power receiver 100, an energy storage module, an application module and a communication module.

The third circuit 125 may be separated from the first circuit 102 and the second circuit 103 by one or a plurality of media or materials and interact with one another wirelessly through acoustic power, which may also include ultrasonic power.

The third circuit 125 may be designed to perform tasks that involve sending data, receiving data and/or wireless powering. The third circuit 125 could be made up of separate modules to which one or more of the above tasks are individually assigned. Moreover, the above tasks may be executed by using simultaneously at least two acoustic waves of different frequencies.

The acoustic power receiver 100 comprising the first circuit 102 and the second circuit 103 may be designed to capture, store and transfer power from the third circuit 125, and at the same time to either receive data (downlink) and/or modulate a reflected wave to send data (uplink) in order to communicate with the third circuit 125. Those tasks may be executed by using simultaneously one or more acoustic waves of different frequencies. Communication (data exchange) between the third circuit and the acoustic power receiver 100 may be done both ways.

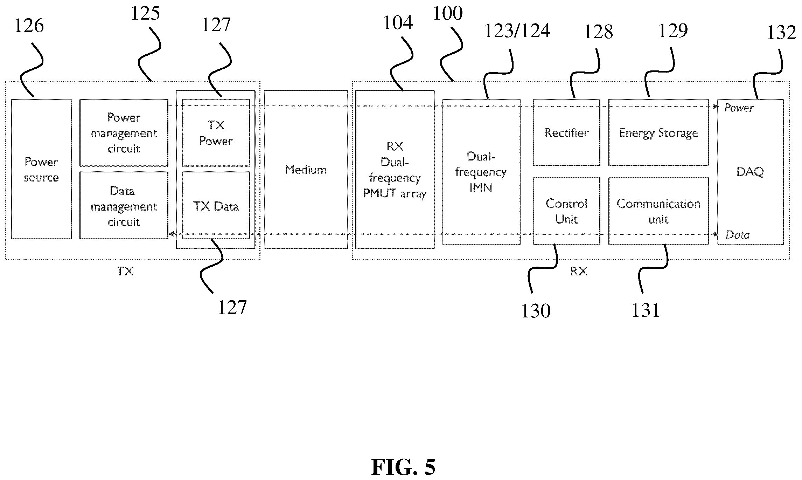

FIG. 5 shows a power transmission system for communication according to this disclosure. The power transmission system may comprise a receiver 100 and a third circuitry 125.

The third circuitry 125 may comprise a power source 126 to operate its active components and to provide power to the acoustic power receiver 100, and transmitters 127 (TX) with associated circuitry to send acoustic power with one acoustic frequency 109 and send or receive data with another acoustic frequency 110. The acoustic power receiver 100 may contain a dual-frequency ultrasonic transducers array 104 (e.g. pMUT array) to receive or reflect the incident acoustic power 108, dual-frequency impedance matching networks 123, 124 to adapt the signal to the load 101, one or more rectifiers 128 to convert the AC signals 111, 112 to DC signals, an energy storage 129 to store the received power and transfer power to other components over time, a control unit 130 to control the various components, a communication unit 131 to process received data and to produce data to send, and a data acquisition module 132 (DAQ) to interface with the target application.

Using acoustic waves as mode of communication holds the advantage of being able to penetrate deeply and covering a relatively large distance through obstructive media or materials since acoustic waves suffer less from attenuation. Moreover, those waves can be focused on a small area and allow the receivers 100 to be very small, due to the small wavelengths used.

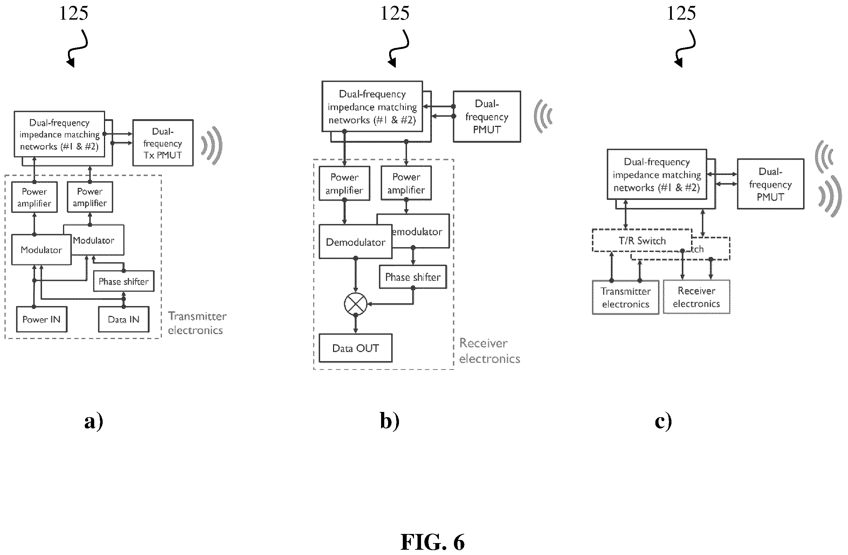

FIG. 6 shows exemplary modules of a third circuit 125. In particular, FIG. 6a shows a transmitter module to send data and power, FIG. 6b shows another receiver module to capture data, and FIG. 6c shows a transceiver to fulfill both functions.

The third circuit 125 may receive and/or send acoustic power and/or data. In general, lower frequency (e.g., 1MHz) may be used to transfer power, while higher frequency (e.g., 2.5MHz) may be used to transfer or receive data.

The transmitter module may comprise an acoustic transmitter which may comprise one or more acoustic transducers 104, e.g., a pMUT, a cMUT, or an array thereof, some transmitter electronics, and an impedance matching network (ΠVIN) for each frequency handled by the acoustic transmitter to ensure that the impedance of the transmitter electronics matches the impedance of the transmitter. The transmitter electronics may comprise inputs for a power source and data, phase shifter(s) to compensate for frequency-dependent effects and ensure signal integrity, modulators and power amplifiers for each frequency branch to encode the information in the carrier signal and boost the propagation distance of the signal respectively.

The other receiver module may comprise another acoustic receiver which comprises one or more acoustic transducers 104, e.g., pMUT, cMUT, or an array thereof, some receiver electronics, and an IMN for each frequency handled by the acoustic receiver to ensure that the impedance of the other receiver electronics matches the impedance of the other receiver. The other receiver electronics may comprise a power amplifier and a demodulator for each frequency respectively to increase the magnitude of the power of the received signal and decode its information, phase shifter(s) to compensate for frequency-dependent effects and ensure signal integrity, and an output collecting the data received over the various frequencies of the other receiver.

A transceiver module may comprise the other receiver module and the transmitter module and may further be equipped with a switch for each handled frequency to select between a transmitter mode of operation or a receiver mode of operation. In this configuration, the same acoustic transducers 104 may play the role of both an acoustic receiver and an acoustic transmitter. It can, for example, use one frequency to power and another to send data, or one frequency to send data and another to receive back (e.g., a reflected wave originally sent by another module), or one frequency to power and the other to receive back data.

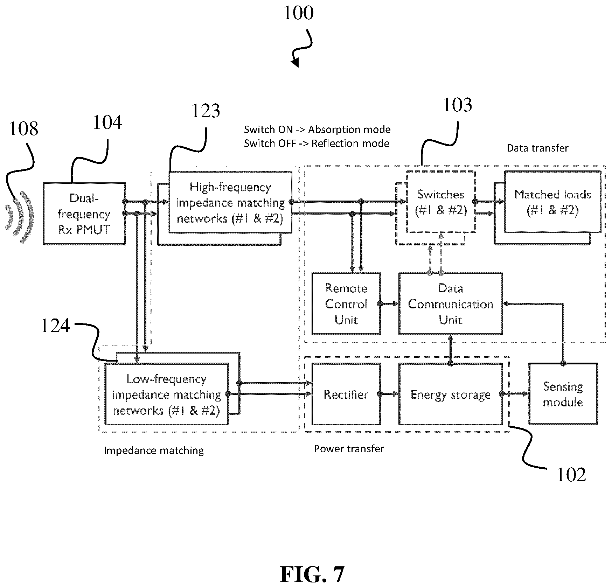

FIG. 7 shows an acoustic power receiver 100 according to this disclosure.

The acoustic power receiver 100 may comprise an acoustic transducer 104, for example, a dual-frequency pMUT, an impedance matching module 123, 124, a power transfer module 102, a data transfer/data exchange module 103, and an application module such as a sensing module. The dual-frequency impedance matching networks 123, 124 in the impedance matching module may accommodate the impedance of the acoustic transducer 104 and those at the power transfer module 102 and the data transfer module 103 at the lower frequency, for example, the frequency of the first AC signal 111, and the higher frequency, for example the frequency of the second AC signal 112, respectively, for efficient power and data transfer.

The power transfer module 102 may select the lower frequency signal, or alternatively the higher frequency signal, and may comprise a rectifier to transform this first AC signal 111 into a DC signal in order to use its power to charge a load 101 or an energy storage unit 101, for example, a battery, and capacitor. This unit may then in turn provide power to active elements in the application module and/or the data transfer module 103.

The data transfer module 103 may comprise a remote control unit, for example, comprising a data recovery unit, to decode a data carrying signal transmitted to the acoustic power receiver 100 from the third circuit 125 to obtain a downlink data stream 117. If the second acoustic frequency 110 is used for data exchange, the data carrying signal may, for example, be a differential signal of the two electrodes of the acoustic transducer 104 of the acoustic power receiver 100. The data transfer module 103 may comprise a data communication unit to process the received information from the outside, for example, from the third circuit 125, an application module, for example a sensing module, and a power transfer module 102 in order to produce the uplink data 118 to send back to the third circuit 125.

The data transfer module 103 may comprise for each transducer electrode a matched load for the frequency signal for communication and a switch to disconnect or connect that load to the dual-frequency IMN, thereby enabling the control over whether the incoming frequency signal is absorbed or reflected back. Thus, uplink data transfer may be enabled by backscattering.

The application module may depend on what application the device is used for and is therefore not limited to the examples given hereafter. It relates to the elements used to perform the device's assigned tasks or functions, by the sensors, actuators, and stimulators.

The remote receiver 100 can receive one or more acoustic waves 108 of at least two different frequencies 109, 110 from one or more other transducers acting as transmitters/other receivers/transceivers. A wave characterized by one frequency 109, for example a lower frequency, may provide acoustic power to charge the energy storage unit of the remote receiver 100. Another wave characterized by another frequency 110, for example a higher frequency, may in one case be sensed by the remote device to deliver information (downlink), and in another case may be reflected or not by using a switch to form an encoded backscattered wave to send information back to a base device (uplink).

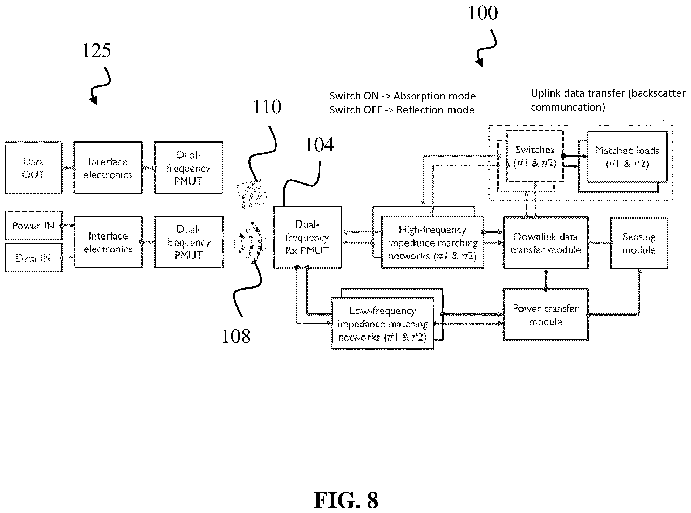

FIG. 8 shows a system comprising the acoustic power receiver 100 according to this disclosure performing an uplink operation.

The uplink data stream 118 from the acoustic power receiver 100 (remote device) may be encoded in the reflected frequency signal, for example, the reflected second acoustic frequency 110, to send back to the third circuit 125. The uplink data stream 118 may be data sensed and collected by the application module, e.g., the sensing module. For example, that data could be related to values of temperature, pressure, concentrations, position, orientation, statuses, detection events, actuator/stimulator status, and history. This mode of communication may be highly energy efficient and reliable. For example, a data rate may be about a few hundred kbps.

The uplink data 118 can also be some information in response to the downlink data 117 collected by the remote control unit, for example, the data recovery unit, and the information about the power status of the remote device. The information may be gathered and processed by the data communication unit to generate the binary uplink data stream 118. The binary data 118 may modulate the reflected signal of the incoming signal, for example the higher frequency signal, and can be converted to binary data in the data communication unit by commanding the switching of switches which are connected to matched loads designed in such a way that, once they are connected to the IMNs by switching the switches on, the IMNs' impedances match their respective loads so that the incoming signal can be absorbed. Conversely, whenever they are disconnected by switching the switches off, the IMNs' impedances no longer match their respective loads, and the signal, for example, the second AC signal 112, may be at least partially reflected back. Hence, by switching on and off the switches, binary states can be expressed in the reflected signal, for example, the reflected second AC signal 112 and/or the reflected second acoustic frequency 110. By commanding the switches using the data in the data communication unit, the transducers in the acoustic power receiver 100 can send acoustic waves back to the other receivers or transceivers of the third circuit 125 in the form of an emission of acoustic waves carrying a stream of data characterized by high and low (or zero) amplitude. Thereafter, the data may be further be processed by the third circuit 125 and possibly by external devices.

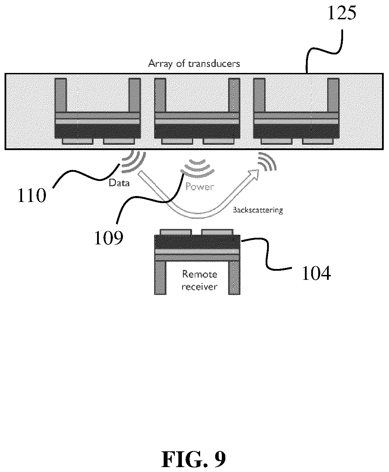

FIG. 9 shows an interaction based on one or more acoustic waves between the other transducers, for example, the other transducers acting as transmitters/other receivers/transceivers, and the remote receiver according to this disclosure. The first acoustic frequency 109 for a power channel may be provided from an acoustic transducer of the third circuitry 125 and received by the acoustic transducer 104 of the acoustic power receiver 100. The second acoustic frequency 110 for a data channel may be provided from another acoustic transducer of the third circuitry 125 and reflected by the acoustic transducer 104 of the acoustic power receiver 100 back towards a further acoustic transducer of the third circuitry 125.

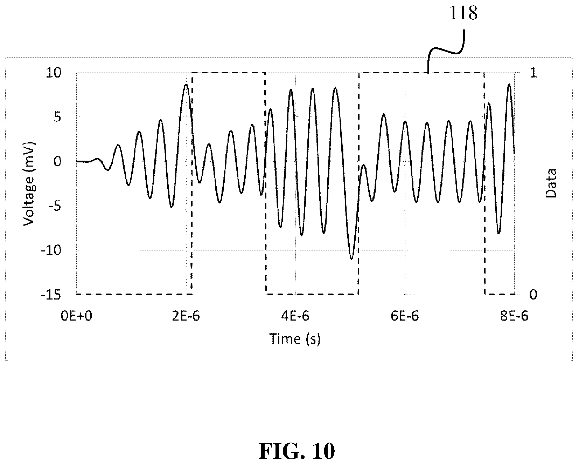

FIG. 10 shows a conversion between analog voltage values and binary values over time of a signal that is based on an uplink data 118 stream according to this disclosure.

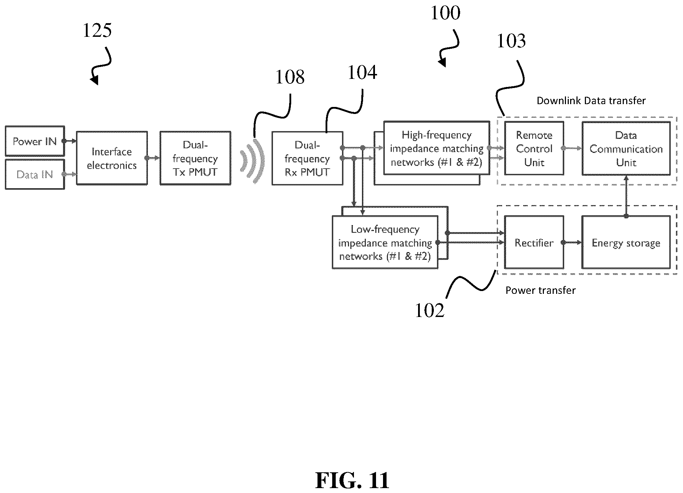

FIG. 11 shows a system comprising the acoustic power receiver 100 according to this disclosure performing a downlink operation.

The downlink operation may begin with the third circuit 125 sending input data and source power to the acoustic power receiver 100 in the form of one or more acoustic waves 108 with its transducers. The transducers of the acoustic power receiver 100 may capture the waves and convert them into electrical signals 111, 112. The AC signal carrying the input power, for example, the first AC signal 111, may be converted to DC signals and their energy may be stored in the energy storage unit, whereas the AC signal carrying the input data, for example, the second AC signal 112, may be received and processed by the remote control unit, for example, comprising a data recovery unit, and/or the data communication unit in the data transfer module 103.

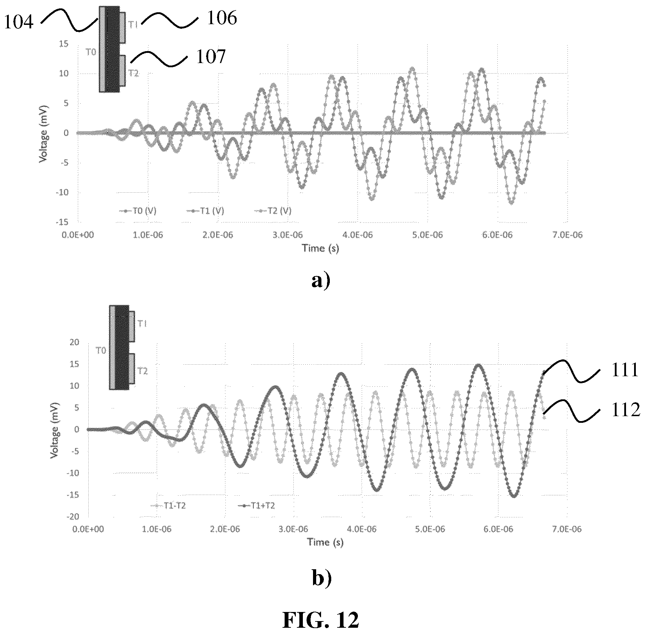

FIG. 12 shows exemplary signals obtained with a dual-frequency acoustic transducer 104 of an acoustic power receiver 100 according to this disclosure. The voltage values shown in FIG. 12a are recorded at the different electrodes of the acoustic transducer 104. The voltage values shown in FIG. 12b are a differential signal and a sum signal of the signals shown in FIG. 12a. In this example the differential signal frequencies are respectively 1 MHz and 2.5 MHz.

For example, a first AC signal 111 and a second AC 112 signal having the first phase 113 may form a first combined AC signal at the first electrode 106, wherein the first AC signal 111 the second AC signal 112 having the second phase 114 may form a second combined AC signal at the second electrode 107.

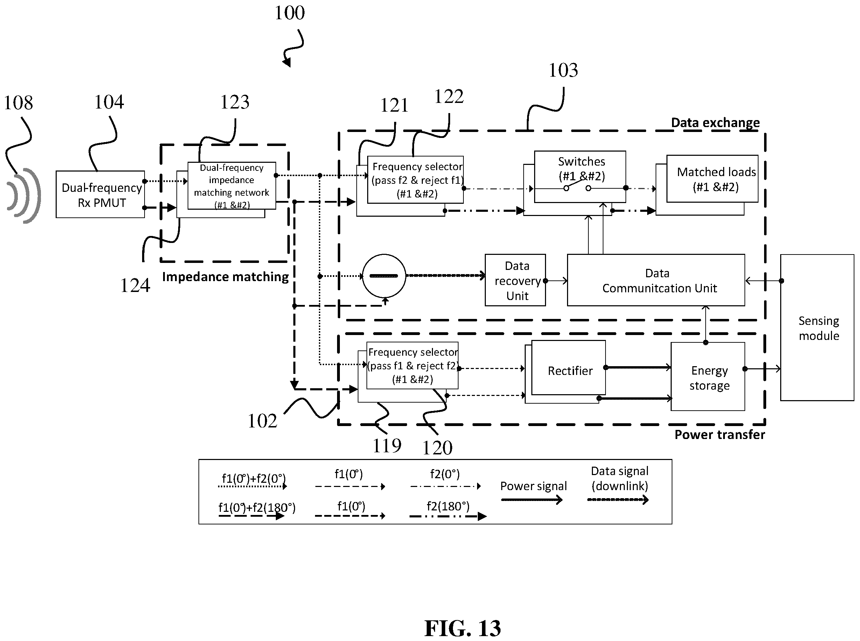

FIG. 13 shows an exemplary acoustic power receiver 100 according to this disclosure.

For example, in FIG. 13 the first combined AC signal is indicated as f1(0°) + f2(0°) and the second combined AC signal is indicated as f1(0°) + f2(180°), wherein f1 represents the first AC signal 111 and f2 represents the second AC signal.

The second circuitry 103 may be configured to subtract the first combined AC signal and the second combined AC signal to extract the second AC signal to obtain the downlink data signal 118 from said extracted second AC signal 112. For example, the components f1(0°) and f1(0°) may destructively interfere, wherein the components f2(0°) and f2(180°) may constructively interfere based on said subtraction.

The second circuitry 103 may comprise a third frequency selector 121 and a fourth frequency selector 122 to extract the second AC signal 112 from the first combined AC signal and the second combined AC signal, and provide the extracted second AC signal 112 to one or more switches and/or one or more matched loads for modulating and partially reflecting the extracted second AC signal 112.

The first circuitry 102 may comprise a first frequency selector 119 and a second frequency selector 120 to extract the first AC signal 111 from the first combined AC signal and the second combined AC signal, and provide the extracted first AC signal 111 to one or more rectifiers and/or a power signal to the load.

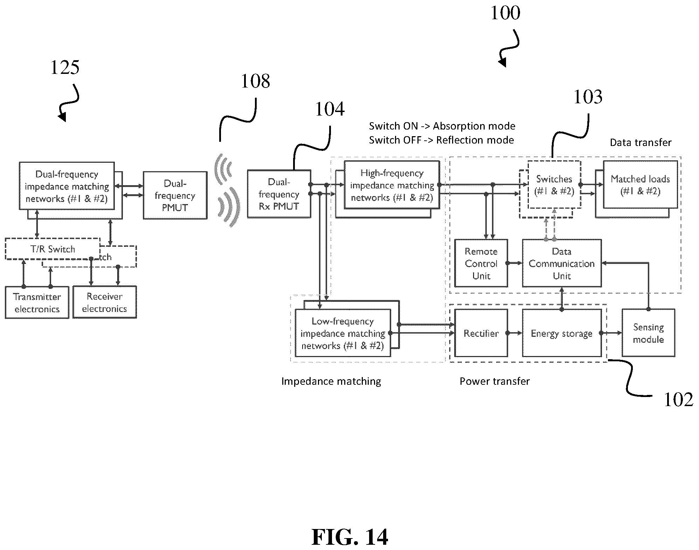

FIG. 14 shows an exemplary system comprising a third circuitry 125 and an acoustic power receiver 100 according to this disclosure. The third circuitry 125 may comprise a transceiver, for example, the transceiver as shown in FIG. 6c. The acoustic power receiver 100 may, for example, be the acoustic power receiver 100 shown in FIG. 7.

The system may provide a means of communication between another receiver/transmitter/transceiver circuit at an accessible location and an acoustic power receiver 100 in or connected to a device fulfilling a function in a remote location. This permits exchange of data and power through acoustic waves of at least two different frequencies. For the downlink operation, power is inherent to the wave while data can be modulated in the wave. For the uplink operation, data may be emitted with low and high values by using switches.

The acoustic power receiver 100 may enable the transfer of data while, at the same time, providing the necessary power to operate the remote device. Firstly, this allows for continuous seamless communication without needing to interrupt the data transfer to charge the remote device since power transfer and data exchange are done in parallel, independently from one another. Secondly, since the energy storage unit can also be continuously charged without interruption to transfer data, it may be even further miniaturized. In fact, since charging can be performed at any time, the additional battery/capacitor's capacity that would have been necessary in the case of a non-simultaneous system may not be required to keep it operating despite not being able to be charged because it is in the middle of communicating. This may be particularly advantageous if power consumption of a device is high which causes the battery/capacitor to deplete fast. This property makes it suitable, for instance, for next generation's battery-free implants. In any case, all this can enable a smaller form factor for the remote device overall, which is beneficial for more advanced applications. Thirdly, charging can be controlled remotely and be more efficient, as data related to the energy storage unit may also be sent back. Lastly, it permits faster communication and faster charging as there is no need to control a switch for alternating between the two types of transfer.

The acoustic power receiver 100 may comprise a processor.

Generally, the processor may be configured to perform, conduct or initiate the various operations of the acoustic power receiver 100 described herein. The processor may comprise hardware and/or may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The acoustic power receiver 100 may further comprise memory circuitry, which stores one or more instruction(s) that can be executed by the processor, in particular under control of the software. For instance, the memory circuitry may comprise a non-transitory storage medium storing executable software code which, when executed by the processor, causes the various operations of the acoustic power receiver 100 to be performed. In one embodiment, the acoustic power receiver 100 may comprises one or more processors and a non-transitory memory connected to the one or more processors. The non-transitory memory may carry executable program code which, when executed by the one or more processors, causes the acoustic power receiver 100 to perform, conduct or initiate the operations or methods described herein.

The third circuit 125 may comprise a processor.

Generally, the processor may be configured to perform, conduct or initiate the various operations of the third circuit 125 described herein. The processor may comprise hardware and/or may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The third circuit 125 may further comprise memory circuitry, which stores one or more instruction(s) that can be executed by the processor, in particular under control of the software. For instance, the memory circuitry may comprise a non-transitory storage medium storing executable software code which, when executed by the processor, causes the various operations of the third circuit 125 to be performed. In one embodiment, the third circuit 125 may comprises one or more processors and a non-transitory memory connected to the one or more processors. The non-transitory memory may carry executable program code which, when executed by the one or more processors, causes the third circuit 125 to perform, conduct or initiate the operations or methods described herein.

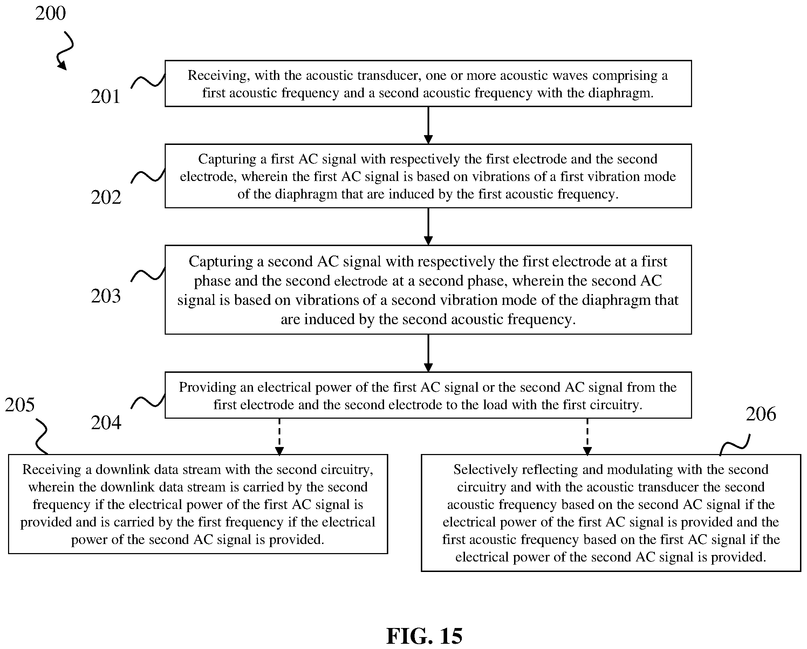

FIG. 15 shows a method 200 according to this disclosure. The method 200 is a method of operating a wireless acoustic power receiver 100 for a load 101. The receiver 100 comprises an acoustic transducer 104, a first circuitry 102, and a second circuitry 103. The acoustic transducer 104 comprises a diaphragm 105, a first electrode 106 provided on the diaphragm 105, and a second electrode 107 provided on the diaphragm 105.

The method 200 comprises a step 201 of receiving, with the acoustic transducer 104, one or more acoustic waves 108 comprising a first acoustic frequency 109 and a second acoustic frequency 110 with the diaphragm 105. Further, the method 200 comprises a step 202 of capturing a first AC signal with respectively the first electrode 106 and the second electrode 107, wherein the first AC signal 111 is based on vibrations of a first vibration mode of the diaphragm 105 that are induced by the first acoustic frequency 109. Further, the method 200 comprises a step 203 of capturing a second AC signal 112 with respectively the first electrode 106 at a first phase 113 and the second electrode 107 at a second phase 114, wherein the second AC signal 112 is based on vibrations of a second vibration mode of the diaphragm 105 that are induced by the second acoustic frequency 110. Further, the method 200 comprises a step 204 of providing an electrical power 115, 116 of the first AC signal 111 or the second AC signal 112 from the first electrode 106 and the second electrode 107 to the load 101 with the first circuitry 102. Further, the method 200 comprises a step 205 of receiving a downlink data stream 117 with the second circuitry 103, wherein the downlink data stream 117 is carried by the second frequency if the electrical power 115 of the first AC signal 111 is provided and is carried by the first frequency if the electrical power 116 of the second AC signal 112 is provided; and/or a step 206 of selectively reflecting and modulating with the second circuitry 103 and with the acoustic transducer 104 the second acoustic frequency 110 based on the second AC signal 112 if the electrical power 115 of the first AC signal 111 is provided and the first acoustic frequency 109 based on the first AC signal 111 if the electrical power 116 of the second AC signal 112 is provided.

The first acoustic frequency 109 is different from the second acoustic frequency 110, the first vibration mode is different from the second vibration mode, and the first phase 113 is different from the second phase 114.

The disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A wireless acoustic power receiver (100) for a load (101), the receiver (100) comprising an acoustic transducer (104), a first circuitry (102), and a second circuitry (103), the acoustic transducer (104) comprising a diaphragm (105), a first electrode (106) provided on the diaphragm (105), and a second electrode (107) provided on the diaphragm (105),
wherein the acoustic transducer (104) is configured to
receive one or more acoustic waves (108) comprising a first acoustic frequency (109) and a second acoustic frequency (110) with the diaphragm (105), wherein the first acoustic frequency (109) is different from the second acoustic frequency (110);
capture a first alternating current, AC, signal with respectively the first electrode (106) and the second electrode (107), wherein the first AC signal (111) is based on vibrations of a first vibration mode of the diaphragm (105) that are induced by the first acoustic frequency (109); and
capture a second AC signal (112) with respectively the first electrode (106) at a first phase (113) and the second electrode (107) at a second phase (114), wherein the second AC signal (112) is based on vibrations of a second vibration mode of the diaphragm (105) that are induced by the second acoustic frequency (110), wherein the first vibration mode is different from the second vibration mode, and wherein the first phase (113) is different from the second phase (114);
wherein the receiver (100) is configured to
provide an electrical power (115, 116) of the first AC signal (111) or the second AC signal (112) from the first electrode (106) and the second electrode (107) to the load (101) with the first circuitry (102); and is further configured to
receive a downlink data stream (117) with the second circuitry (103), wherein the downlink data stream (117) is carried by the second frequency if the electrical power (115) of the first AC signal (111) is provided and is carried by the first frequency if the electrical power (116) of the second AC signal (112) is provided; and/or
selectively reflect and modulate with the second circuitry (103) and with the acoustic transducer (104) the second acoustic frequency (110) based on the second AC signal (112) if the electrical power (115) of the first AC signal (111) is provided and the first acoustic frequency (109) based on the first AC signal (111) if the electrical power (116) of the second AC signal (112) is provided.

2. The receiver (100) according to claim 1,
wherein the receiver (100) is configured to
modulate the second AC signal (112) having the first phase (113) and the second AC signal (112) having the second phase (114) based on an uplink data stream (118) with the second circuitry (103); and
selectively reflect and modulate the second acoustic frequency (110) of the one or more acoustic waves (108) based on the modulated second AC signal (112) having the first phase (113) and the modulated second AC signal (112) having the second phase (114) with the acoustic transducer (104); or
wherein the receiver (100) is configured to
modulate the first AC signal (111) based on an uplink data stream (118) with the second circuitry (103); and
selectively reflect and modulate the first acoustic frequency (109) of the one or more acoustic waves (108) based on the modulated first AC signal (111) with the acoustic transducer (104).

3. The receiver (100) according to claim 1 or 2,
wherein the first AC signal (111) and the second AC signal (112) having the first phase (113) form a first combined AC signal at the first electrode (106),
wherein the first AC signal (111) and the second AC signal (112) having the second phase (114) form a second combined AC signal at the second electrode (107),
wherein the first circuitry (102) is configured to
extract the first AC signal (111) from respectively the first combined AC signal and the second combined AC signal; and
provide the electrical power (115) of the extracted first AC signal (111) to the load (101).

4. The receiver (100) according to claim 3,
wherein the first circuitry (102) comprises a first frequency selector (119) and a second frequency selector (120) that are respectively configured to extract the first AC signal (111) from the first combined AC signal and the second combined AC signal.

5. The receiver (100) according to any one of the preceding claims,
wherein the first AC signal (111) and the second AC signal (112) having the first phase (113) form a first combined AC signal at the first electrode (106),
wherein the first AC signal (111) and the second AC signal (112) having the second phase (114) form a second combined AC signal at the second electrode (107),
wherein the second circuitry (103) is configured to
extract the second AC signal (112) from respectively the first combined AC signal and the second combined AC signal; and
obtain the downlink data stream (117) from the extracted second AC signal (112).

6. The receiver (100) according to claim 5,
wherein the second circuitry (103) is configured to
subtract the first combined AC signal and the second combined AC signal to extract the second AC signal (112).

7. The receiver (100) according to any one of the preceding claims,
wherein the first phase (113) is 180° shifted with respect to the second phase (114), and/or
wherein the first AC signal (111) is captured by the first electrode (106) and the second electrode (107) at the same phase.

8. The receiver (100) according to any one of the preceding claims,
wherein the first AC signal (111) and the second AC signal (112) having the first phase (113) form a first combined AC signal at the first electrode (106),
wherein the first AC signal (111) the second AC signal (112) having the second phase (114) form a second combined AC signal at the second electrode (107),
wherein the second circuitry (103) comprises a third frequency selector (121) and a fourth frequency selector (122) that are respectively configured to extract the second AC signal (112) having the first phase (113) from the first combined AC signal and the second AC signal (112) having the second phase (114) from the second combined AC signal.

9. The receiver (100) according to any one of the preceding claims,
wherein the second circuitry (103) comprises a first switch, and a second switch,
wherein in a first switching state of the first switch, the first switch is configured to receive and provide the second AC signal (112) having the first phase (113) to a first impedance matched load (101) for the second frequency, to absorb the second AC signal (112) having the first phase (113),
wherein in a first switching state of the second switch, the second switch is configured to receive and provide the second AC signal (112) having the second phase (114) to a second impedance matched load (101) for the second frequency, to absorb the second AC signal (112) having the second phase (114),
wherein in a second switching state of the first switch, the first switch is configured to receive and reflect the second AC signal (112) having the first phase (113) towards the first electrode (106), and
wherein in a second switching state of the second switch, the second switch is configured to receive and reflect the second AC signal (112) having the second phase (114) towards the second electrode (107),
wherein the second circuitry (103) is configured to
switch the first switch between the first switching state and the second switching state according to a binary uplink data stream (118), so as to modulate the second AC signal (112) having the first phase (113); and
switch the second switch between the first switching state and the second switching state according to the binary uplink data stream (118), so as to modulate the second AC signal (112) having the second phase (114).

10. The receiver (100) according to any one of the claims 2 to 9,
wherein the second circuitry (103) is further configured to
provide the modulated second AC signal (112) having the first phase (113) to the first electrode (106) and the modulated second AC signal (112) having the second phase (114) to the second electrode (107); and,
wherein the acoustic transducer (104) is configured to
selectively reflect and modulate the second acoustic frequency (110) of the one more acoustic waves by selectively supporting or suppressing the vibrations of the second vibration mode of the diaphragm (105) based on the modulated second AC signal (112) that has the first phase (113) at the first electrode (106) and based on the modulated second AC signal (112) that has the second phase (114) at the second electrode (107).

11. The receiver (100) according to any one of the preceding claims,
wherein the second vibration mode has the next higher resonance frequency of the diaphragm (105) following a resonance frequency of the first vibration mode, or the first vibration mode has the next higher resonance frequency of the diaphragm (105) following a resonance frequency of the second vibration mode.

12. The receiver (100) according to any one of the preceding claims,
wherein the acoustic transducer (104) is configured to
simultaneously capture the second AC signal (112) at the first phase (113) and the first AC signal (111) with the first electrode (106); and/or
simultaneously capture the second AC signal (112) at the second phase (114) and the first AC signal (111) with the second electrode (107).

13. The receiver (100) according any one of the preceding claims,
wherein the load (101) is one of: a medical implant, a device for use underwater, a device for use in air, and an Internet of Things system.

14. The receiver (100) according any one of the preceding claims,
wherein the acoustic transducer (104) comprises a piezoelectric diaphragm (105) and/or is a piezoelectric micromachined ultrasound transducer, pMUT; or
wherein the acoustic transducer (104) is a capacitive micromachined ultrasound transducer, cMUT.

15. A method (200) of operating a wireless acoustic power receiver (100) for a load (101), wherein the receiver (100) comprises an acoustic transducer (104), a first circuitry (102), and a second circuitry (103), the acoustic transducer (104) comprising a diaphragm (105), a first electrode (106) provided on the diaphragm (105), and a second electrode (107) provided on the diaphragm (105),
wherein the method comprises:
receiving (201), with the acoustic transducer (104), one or more acoustic waves (108) comprising a first acoustic frequency (109) and a second acoustic frequency (110) with the diaphragm (105), wherein the first acoustic frequency (109) is different from the second acoustic frequency (110);
capturing (202) a first alternating current, AC, signal with respectively the first electrode (106) and the second electrode (107), wherein the first AC signal (111) is based on vibrations of a first vibration mode of the diaphragm (105) that are induced by the first acoustic frequency (109); and
capturing (203) a second AC signal (112) with respectively the first electrode (106) at a first phase (113) and the second electrode (107) at a second phase (114), wherein the second AC signal (112) is based on vibrations of a second vibration mode of the diaphragm (105) that are induced by the second acoustic frequency (110), wherein the first vibration mode is different from the second vibration mode, and wherein the first phase (113) is different from the second phase (114);
wherein the method further comprises
providing (204) an electrical power (115, 116) of the first AC signal (111) or the second AC signal (112) from the first electrode (106) and the second electrode (107) to the load (101) with the first circuitry (102); and further comprises
receiving (205) a downlink data stream (117) with the second circuitry (103), wherein the downlink data stream (117) is carried by the second frequency if the electrical power (115) of the first AC signal (111) is provided and is carried by the first frequency if the electrical power (116) of the second AC signal (112) is provided; and/or
selectively reflecting and modulating (206) with the second circuitry (103) and with the acoustic transducer (104) the second acoustic frequency (110) based on the second AC signal (112) if the electrical power (115) of the first AC signal (111) is provided and the first acoustic frequency (109) based on the first AC signal (111) if the electrical power (116) of the second AC signal (112) is provided.
